(19) Europäisches Patentamt
European Patent Office
Office européen des brevets

(11) Veröffentlichungsnummer: **0 167 002**
**B1**

(12) # EUROPÄISCHE PATENTSCHRIFT

(45) Veröffentlichungstag der Patentschrift: **19.04.89**

(51) Int. Cl.⁴: **C 08 L 75/00**, C 08 G 18/38, C 08 K 3/34, C 04 B 28/24

(21) Anmeldenummer: **85106956.7**

(22) Anmeldetag: **05.06.85**

(54) **Organomineralprodukte, Verfahren zu ihrer Herstellung und ihre Verwendung.**

(30) Priorität: **06.06.84 DE 3421086**

(43) Veröffentlichungstag der Anmeldung: **08.01.86 Patentblatt 86/2**

(45) Bekanntmachung des Hinweises auf die Patenterteilung: **19.04.89 Patentblatt 89/16**

(84) Benannte Vertragsstaaten: **AT BE CH DE FR GB IT LI LU NL SE**

(56) Entgegenhaltungen:
**EP-A-0 056 145**
**DE-A-2 325 090**
**DE-A-2 460 834**
**DE-A-2 518 192**
**US-A-4 346 192**

(73) Patentinhaber: **F. Willich Berg- und Bautechnik GmbH & Co., Bünnerhelfstrasse 6-8, D-4600 Dortmund 70 (DE)**

(72) Erfinder: **Hilterhaus, Karl- Heinz, Rotdornstrasse 34, D-4504 Georgsmarienhütte (DE)**

(74) Vertreter: **Vossius & Partner, Siebertstrasse 4 P.O. Box 86 07 67, D-8000 München 86 (DE)**

**EP 0 167 002 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Verfahren zur Herstellung von porigen (expandierten) und nicht porigen Organomineralprodukten durch Umsetzung von Polyisocyanaten und wäßrigen Alkalisilikatlösungen (Wassergläser) sind bekannt; vgl. DE-A-1 770 384, DE-A-2 460 834 und EP-B-0 000 579. Eingesetzt werden vorzugsweise alkalische, gelöste Wassergläser mit unterschiedlichem Feststoffgehalt und Verhältnis von $Me_2O/SiO_2$. Im einfachsten Fall werden die Wassergläser mit im flüssigen Zustand zumischbaren, vorzugsweise löslichen organischen Zusätzen vermischt, um die Eigenschaften des Wasserglases bzw. des Produktes aus dem Wasserglas in irgendeiner Weise zu ändern. Beispiele hierfür sind Zumischungen von härtend wirkenden Stoffen, wie Formamid, Glyoxal, stabilisierend wirkenden Stoffen, wie Formaldehydlösungen und elastifizierend wirkenden Stoffen, wie bestimmten Epoxidharzen und Polyäther.

Kompliziertere Verfahren zur Herstellung von Organomineralprodukten verwenden Mischungen aus Wasserglaslösung und reaktiven NCO-gruppenhaltigen Präparationen mit oder ohne zusätzliche Modifikatoren, die beim Vermischen der Komponenten eine chemische Reaktion bewirken. Dabei entstehen porige und nichtporige Endprodukte. Je nach Rezepturgestaltung (Treibmittel) erhält man expandierte Schaumstoffe niedriger Druckfestigkeit oder nicht expandierte Organomineralprodukte; vgl. FR-A-1 419 552, US-A-3 634 342, GB-A-1 445 940 und DE-A-2 359 609.

Für die Produkte dieser Verfahren wurde eine Verwendung in den verschiedensten Industrien als Kitte, Klebstoffe, Isolierstoffe für Wärme oder Kälte und Schallschutz, Beschichtungs- und Abdichtungsmittel z. B. gegen Wasser vorgeschlagen. Obwohl sie wegen ihrer Preiswürdigkeit und der besonderen Eigenschaften als anorganisch-organische Produkte immer mehr an Bedeutung zunehmen, ist jedoch der Einsatzbereich insbesondere der nicht expandierten Produkte wegen ihrer unzureichenden mechanischen Festigkeit begrenzt. Bekannte nicht expandierte Produkte erreichen beispielsweise nur eine unzureichende Biegezugfestigkeit nach 2 Std. bei 50°C. Auch nach 8 Tagen erreichen sie nicht die Werte der Biegezugfestigkeit entsprechender rein organischer Produkte.

Bei näherer Betrachtung von Reaktionssystemen, bestehend aus Wasserglaslösungen und NCO-gruppenhaltigen Präparationen erkennt man die Schwierigkeiten der Rezepturgestaltung. Einerseits muß der komplizierte chemische Reaktionsablauf verarbeitungstechnisch beherrschbar gemacht werden, andererseits muß das Endprodukt ganz bestimmten Anforderungen entsprechen. Die oft diametral auseinanderstrebenden Anforderungen sind nur unzulänglich auf einen Nenner zu bringen. Sie schränken bisher den Einsatz preisgünstiger Wasserglaslösungen in Organo/Anorgano-Systemen erheblich ein.

In Reaktionssystemen, die ein Polyisocyanat und eine wäßrige Wasserglaslösung enthalten, kann ein stöchiometrisches NCO/OH-Verhältnis nicht erreicht werden, so daß die Reaktion unkontrollierbar fortschreitet. Es kann nicht erwartet werden, daß das Polyisocyanat in irgendeiner Weise zu einem tragenden organischen Polymergerüst aufgebaut wird. Die Reaktion von Polyisocyanat in Wasserglaslösungen ist deshalb nur insofern von technischem Interesse als durch die Reaktion von R-NCO und Wasser gasförmiges $CO_2$ freigesetzt wird, das als Härter und Koagulant für das Wasserglas angesehen werden kann. Das aus dem Polyisocyanat entstehende niedermolekulare Harnstoffprodukt bleibt als harter Füllstoff im mineralischen Gefüge des Wasserglases feinstkörnig verteilt liegen.

Ein weiteres Problem ergibt sich aus dem Überschuß an gasförmigem $CO_2$ bei praktischer Rezepturgestaltung So wird schon in der DE-A-1 770 384 auf die Notwendigkeit, das stöchiometrische Verhältnis der Reaktanten möglichst einzuhalten, hingewiesen. Ein Weg, wie dies zu erreichen sei, wird jedoch nicht aufgezeigt.

Bei stöchiometrischem Verhältnis ist außerdem lediglich an das Verhältnis R-NCO/OH gedacht worden. An die Bedeutung eines - wie auch immer definiertes - Reaktionsverhältnisses $Me_2O/SiO_2/CO_2$ ist nicht gedacht worden. Weitergehend wird außerdem darauf hingewiesen, daß bei höherem Polyisocyanatanteil die Reaktion sehr schnell wird und dabei auch zum Aufschäumen neigt. Diese Fakten schränken die Verwertung der nach obiger Schrift erhältlichen Produkte in erheblichem Umfang ein.

Aus dem Formenbau, bei dem Formen aus Sand und Natriumwasserglas hergestellt werden, ist bekannt, daß ein Überschuß an gasförmigem $CO_2$ zur Härtung des Wasserglases die Stabilität der Formmasse negativ beeinflußt. Dies ist ein Effekt, wie er sich durch hohen Überschuß von Polyisocyanat in einer Reaktionsmischung mit Wasserglas ergibt.

In der DE-A-2 460 834 wird dem Reaktionsgemisch Wasserglaslösung/Polyisocyanat ein Katalysator zugesetzt, der in an sich bekannter Weise Polyisocyanat trimerisieren kann. Das dort beschriebene Verfahren dient jedoch ausschließlich zur Herstellung von Organomineralschäumen. Im Hinblick auf die Katalysatormenge findet sich in der DE-A-2 460 834 keine gezielte Lehre; in den Beispielen werden bei Verwendung von 2,4,6-Tris-(dimethylaminomethyl)-phenol als Katalysator und Polyphenolpolymethylenpolyisocyanat mit einem NCO-Gruppengehalt von etwa 28 % etwa 18 bis 36 mMol dieser Verbindung pro Mol NCO-Gruppen eingesetzt. Bei anderen Katalysatoren bzw. Polyisocyanaten ist das Verhältnis noch erheblich größer.

Der Erfindung liegt die Aufgabe zugrunde, neue Organomineralprodukte aus Polyisocyanaten und Wasserglaslösungen bereitzustellen, die neben dem günstigen breiten physikalischen Eigenschaftsspektrum der bekannten Produkte auch hohe mechanische Festigkeit aufweisen und außerdem preiswert sind.

Diese Aufgabe wird durch den überraschenden Befund gelöst, daß man durch den Einsatz einer definierten Menge von bestimmten Katalysatoren, bezogen auf die Menge der vorhandenen NCO-Gruppen, zu einem

Organomineralprodukt gelangen kann, in dem ein organisches Gerüst und ein anorganisches Gerüst dreidimensional ineinander verwoben sind und zwar so, daß bei der Reaktion keine Volumenexpansion stattfindet und deshalb das Endprodukt als dichtes hochfestes "interpermeated" oder "interpenetrated network" vorliegt.

Bei Zusatz einer definierten Menge eines Polyisocyanat-Trimerisierungskatalysators zu dem Reaktionsgemisch aus Polyisocyanat und Wasserglaslösung wird einerseits diejenige Menge an gasförmigem $CO_2$ entwickelt, die für die optimale Härtung des anorganischen Teils des Gemisches benötigt wird, während andererseits auch in ausreichendem Maß Trimerisierung des Polyisocyanats erreicht wird, um ein organisches Gerüst aufzubauen. Damit entsteht ein ineinander verwobener anorganischer und organischer dreidimensionaler Körper, der hervorragende mechanische Festigkeit aufweist.

Gegenstand der Erfindung sind somit hochfeste Organomineralprodukte, erhältlich durch Umsetzung von Polyisocyanaten und wäßrigen Alkalisilikatlösungen in Gegenwart eines die Trimerisierung des Polyisocyanates aktivierenden Katalysators, die dadurch gekennzeichnet sind, daß der Katalysator bei der Herstellung unter Berücksichtigung von Zusammensetzung und Menge - relativ zur Polyisocyanatmenge - der wäßrigen Alkalisilikatlösung in derartiger Menge pro Mol NCO-Gruppen im Reaktionsgemisch eingesetzt wird, daß bei der Umsetzung ineinander verwobene Netzwerke aus anorganischem und organischem Polymerisat entstehen.

Es wurde gefunden, daß in überraschender Weise Polyisocyanate in wäßriger, alkalischer $SiO_2$-haltiger Lösung zum wesentlichen Teil zur Trimerisierung angeregt werden können. Dabei wird die NCO/Wasserreaktion weitgehend unterdrückt, so daß eine durch die Rezepturgestaltung steuerbare Menge an gasförmigem $CO_2$ entsteht, welches optimal zur Reaktion mit dem Wasserglas verwendet wird. Während der Reaktion bauen sich gleichzeitig zwei ineinander verwobene Polymergerüste auf.

Im ersten Reaktionsschritt reagiert ein Teil des Polyisocyanates mit dem Wasser zu Polyharnstoff unter Abspaltung von gasförmigem $CO_2$. Das in situ entstandene $CO_2$ reagiert augenblicklich mit dem $Me_2O$-Anteil der Wasserglaslösung zu $Me_2CO_3.xH_2O$ (Me ist ein Alkalimetall, insbesondere Natrium oder Kalium). Durch Bindung von $Me_2O$ aus der Wasserglaslösung wird der $SiO_2$-Anteil zur Polykieselsäurebildung angeregt. Bei der Reaktion werden erhebliche Wärmemengen frei, so daß in der nächstfolgenden Stufe ein bestimmter weiterer Teil des Polyisocyanates die Trimerisierungsreaktion eingehen kann. Ersttrimerisierte Produkte erfahren ihrerseits mindestens teilweise eine weitere Trimerisierung, so daß sich ein verzweigtes hochmolekulares Polymergerüst aufbauen kann.

In der beiliegenden Zeichnung zeigt

Fig. 1 die Beziehung zwischen dem Molverhältnis Katalysator/NCO-Gruppen im Reaktionsgemisch und der Biegezugfestigkeit der Produkte, und

Fig. 2 die Beziehung zwischen dem Molverhältnis $NCO/SiO_2$ im Reaktionsgemisch und der Biegezugfestigkeit der Produkte.

Die notwendigen Bestandteile des Reaktionsgemisches zur Herstellung der hochfesten Organomineralprodukte der Erfindung sind eine Wasserglaslösung, ein Polyisocyanat und ein Katalysator, der sich zur Trimerisierung von Polyisocyanaten eignet. Zur Erzielung hochfester Organomineralprodukte muß das Molverhältnis Katalysator/NCO-Gruppen in genau definierten Grenzen festgelegt werden.

Zur Herstellung der Organomineralprodukte der Erfindung können die auf dem Fachgebiet üblicherweise benutzten wäßrigen Alkalisilikatlösungen eingesetzt werden, beispielsweise die in der EP-B-0 000 579 und in der DE-A-2 460 834 beschriebenen Wasserglaslösungen. Wegen ihrer leichten Zugänglichkeit und geringen Viskosität sind Natriumwassergläser bevorzugt.

Bevorzugt eingesetzt werden Natriumwassergläser mit verhältnismäßig hohem Feststoffgehalt, der günstigerweise im Bereich von etwa 40 bis 60, insbesondere etwa 46 bis 52 Gewichtsprozent anorganische Feststoffe liegt. Theoretisch sind auch höherkonzentrierte Wasserglaslösungen verwendbar und im Sinne der Erfindung einsetzbar. Wegen der allzuhohen Viskosität und der daraus sich ergebenden Verarbeitungsschwierigkeiten haben solche Wasserglaslösungen jedoch keine praktische Bedeutung.

Das Molverhältnis von $SiO_2$ zu $Me_2O$ in der eingesetzten Wasserglaslösung ist vorzugsweise verhältnismäßig hoch und liegt günstigerweise im Bereich von etwa 2,09 bis 3,44. Besonders bevorzugt ist ein Bereich von etwa 2,48 bis 3,17, insbesondere 2,70 bis 2,95.

Durch einen $Me_2O$-Gehalt innerhalb des vorstehend angegebenen Bereiches wird der Aufbau des dreidimensionalen anorganisichen Kieselsäuregerüstes begünstigt.

In einem Bereich, bei dem der $Me_2O$-Anteil kleiner als angegeben ist, liegt ein hochviskoses und deshalb verarbeitungstechnisch schwieriges Wasserglas vor. Es genügen schon kleinste Mengen an Reaktions-$CO_2$ um das Wasserglas zum Ausfällen zu bringen. Vermischungsinhomogenitäten führen dabei zu Produkten mit unzureichenden Eigenschaften.

In einem Bereich, bei dem das $Me_2O$-Verhältnis den angegebenen Bereich wesentlich überschreitet, wird zur vollständigen Aushärtung des Wasserglasanteils in einer Rezeptur ein hoher Anteil von Reaktions-$CO_2$ benötigt. Dieser ist aber nur durch Verminderung der Menge des Trimerisierungsproduktes erhältlich. Damit wird das Verhältnis Harnstoffprodukt/Trimerisierungsprodukt zur Harnstoffseite hin verschoben, wobei im Endprodukt der darin verstärkende Trimerisierungsproduktanteil vermindert ist. Dies führt ebenfalls zu Produkten mit unzureichenden Eigenschaften.

Zusammensetzung und Menge des verwendeten Wasserglases müssen bei der Festlegung der

Katalysatormenge berücksichtigt werden, um optimale Festigkeit des Produktes zu erzielen. Organomineralprodukte mit ausgezeichneter Biegezugfestigkeit werden erfindungsgemäß insbesondere dann erhalten, wenn das Polyisocyanat und die Wasserglaslösung in einem Molverhältnis $NCO/SiO_2$ von 0,8 bis 1,4, vorzugsweise von 0,85 bis 1,15, eingesetzt werden. Besonders bevorzugt ist ein Molverhältnis $NCO/SiO_2$ von etwa 1,0.

Wie bereits erwähnt, wird die Verwendung konzentrierter Wasserglaslösungen bevorzugt, um einen zu großen Wassergehalt der Produkte zu vermeiden, der ihre Festigkeitseigenschaften nachhaltig negativ beeinflussen würde. Bei zu starker Verdünnung des Reaktionsgemisches kann außerdem die freigesetzte Wärmemenge für die Einleitung der Trimerisierungsreaktion unzureichend sein. Die Untergrenze des Wasserglasanteils ist durch die Tatsache vorgegeben, daß seine Menge zum Aufbau des anorganischen Gerüstes ausreichen muß. Dazu sind mindestens etwa 0,2, vorzugsweise mindestens etwa 0,5 Gewichtsteile Wasserglas pro Gewichtsteil Polyisocyanat erforderlich. Die Obergrenze des zulässigen Wasserglasanteils ist bei gegebener Wasserglaszusammensetzung dann erreicht, wenn die freigesetzte Menge $CO_2$ nicht mehr ausreicht, den $Me_2O$-Anteil des Wasserglases zu binden. Genauso wie bei zu hohem Wassergehalt ist dann eine vollständige Aushärtung nicht mehr möglich. Bei Verwendung von Natronwasserglas 48/50 mit einem Molverhältnis $SiO_2/Me_2O$ von etwa 2,85 liegt die Obergrenze des Wasserglasgehaltes beispielsweise bei etwa 1,6 bis 1,7 Gewichtsteile Wasserglas pro Gewichtsteil Polyisocyanat. Die angegebenen Grenzwerte können sich bei Wassergläsern mit anderer Zusammensetzung etwas verschieben.

Zur Herstellung der Organomineralprodukte der Erfindung können die üblicherweise auf dem Fachgebiet eingesetzten Polyisocyanate verwendet werden, beispielsweise die in der EP-B-0 000 579 und in der DE-A-2 460 834 genannten Verbindungen. Geeignet sind ferner auch NCO-Voraddukte, wie sie von der Herstellung von Polyurethanen bekannt und in der DE-A-2 460 834 beschrieben sind.

Bevorzugt werden zur Herstellung der Organomineralprodukte der Erfindung Polyisocyanate, die leicht eine Trimerisierungsreaktion zum Aufbau eines dreidimensionalen organischen Gerüstes eingehen können. Dies sind Verbindungen, die möglichst keine sterische Hinderung der an der Umsetzung beteiligten NCO-Gruppen aufweisen. Ein spezielles Beispiel für ein solches, sterisch nicht gehindertes Polyisocyanat ist 4,4'-Diphenylmethandiisocyanat (auch in Form des Phosgenierungsproduktes von Anilin-Formaldehyd-Kondensaten (rohes MDI). Als Präpolymerisat eignet sich ein Umsetzungsprodukt von rohem MDI mit glykolgestartetem Polysiloxan mit einer OH-Zahl von 40 bis 200.

Die erfindungsgemäß eingesetzten Polyisocyanate haben vorzugsweise einen Gehalt an NCO-Gruppen von etwa 10 bis 55 %, bezogen auf die Masse des Polyisocyanats. Besonders bevorzugt sind Polyisocyanate mit einem NCO-Gruppen-Gehalt von etwa 24 bis 36, insbesondere 28 bis 32 Gewichtsprozent. Ein geringerer Anteil an NCO-Gruppen im Polyisocyanat erschwert den Aufbau eines dreidimensionalen organischen Gerüstes. Andererseits wird bei einem höheren NCO-Gehalt leicht zu viel gasförmiges $CO_2$ freigesetzt, was zu einer Überhärtung des anorganischen Teils des Produktes führen kann.

Die dritte, zur Herstellung der Organomineralprodukte der Erfindung notwendige Komponente ist ein Katalysator, der die Trimerisierung der Polyisocyanatkomponente zu katalysieren vermag. Geeignet sind die aus der Polyurethan-Chemie bekannten Trimerisierungskatalysatoren, die vorzugsweise tertiäre Amine und Aminoalkohole sind. Spezielle Beispiele für geeignete Trimerisierungskatalysatoren sind 2,4,6-Tris-(dimethylaminomethyl)-phenol, sowie andere Mannichbasenprodukte mit dem Strukturelement

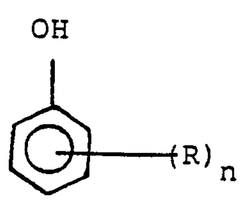

in dem

R einen Rest der Formel 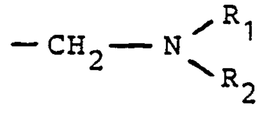

bedeutet;

n einen Wert von 1 bis 3 hat und die Reste R sich in o- oder p-Stellung befinden. Die Reste

$R_1$ und $R_2$ sind gleich oder verschieden und bedeuten $C_{1-4}$-Alkylreste, vorzugsweise Methylgruppen oder $C_{1-4}$-Hydroxyalkylreste, vorzugsweise Hydroxymethylgruppen.

Selbstverständlich können auch Gemische der vorstehend genannten Katalysatoren eingesetzt werden.

Das Molverhältnis von Katalysator zu NCO-Gruppen im Reaktionsgemisch ist für die Herstellung der Organomineralprodukte der Erfindung kritisch, da nur in einem verhältnismäßig engen Bereich dichte Produkte mit hoher mechanischer Festigkeit erhalten werden können. Es bestimmt sich unter Berücksichtigung von Zusammensetzung und Menge des eingesetzten Wasserglases nach folgenden Gesichtspunkten:

a) Die Katalysatormenge muß ausreichen, um die für den Aufbau des organischen Gerüstes erforderliche Trimerisierungsreaktion zu katalysieren.
b) Die Katalysatormenge darf nicht so groß sein, daß eine unkontrollierte, stark exotherme Reaktion abläuft, da diese wegen zu starker $CO_2$-Entwicklung und auch Verdampfung von Wasser zu einem Aufschäumen des Reaktionsgemisches und zu Produkten mit unzugänglicher Festigkeit führen würde.

Bei der üblichen und erfindungsgemäß bevorzugten Zusammensetzung und Menge der Wasserglaslösung beträgt das Verhältnis 6,0 bis 14,5, vorzugsweise 8,5 bis 13,8 und insbesondere 10,2 bis 13,3 mMol Katalysator pro Mol NCO-Gruppen im Reaktionsgemisch.

Bei einer geringeren Katalysatormenge als dem angegebenen Bereich findet kein ausreichender Aufbau eines dreidimensionalen polymeren Gerüstes mehr statt. Andererseits führt eine zu große Katalysatormenge zu einer ungenügenden Härtung des anorganischen Teils und als Folge der stark exothermen Reaktion auch zu einer gewissen Expansion des Produktes.

Zur weiteren Kontrolle der Trimerisierungsreaktion kann ein Cokatalysator mit eingesetzt werden. Dieser kann z. B. aus einer dreiwertigen Eisenverbindung, wie $FeCl_3$, bestehen, wie sie in den verschiedenen technischen Polyisocyanaten häufig herstellungsbedingt anzutreffen sind. Selbstverständlich sind auch die anderen an sich bekannten Cokatalysatoren einsetzbar, z. B. Trialkylphosphane wie Trimethylphospholin, Alkalimetallsalze von Carbonsäuren, wie Natriumacetat oder Natriummaleat, oder Übergangsmetallverbindungen, wie $Sb_2O_3$, $ZrOCl_2$, $SbCl_5$ oder CuCl.

Organomineralprodukte mit besonders günstigen physikalischen Eigenschaften werden erfindungsgemäß dann erhalten, wenn Polyisocyanat und Wasserglas in derartiger Menge und Zusammensetzung eingesetzt werden, daß sich das erläuterte bevorzugte Verhältnis von Katalysatormenge zu NCO-Gruppen zusammen mit dem ebenfalls erläuterten bevorzugten Verhältnis $NCO/SiO_2$ einstellt und außerdem der Katalysator in derartiger Menge vorliegt, daß die entwickelte $CO_2$-Menge gerade zur vollständigen Ausfällung des $Me_2O$-Anteils des Wasserglases ausreicht.

Diese Bedingungen sind bei Organomineralprodukten erfüllt, zu deren Herstellung der Katalysator in einer Menge von 6,0 bis 14,5, vorzugsweise 8,5 bis 13,8, insbesondere 10,2 bis 13,3 mMol pro Mol NCO-Gruppen eingesetzt wird, das Polyisocyanat und die Alkalisilikatlösung in einem Molverhältnis $NCO/SiO_2$ von 0,8 bis 1,4, vorzugsweise 0,85 bis 1,15 verwendet werden. Das Wasserglas soll die übliche bevorzugte Zusammensetzung, d. h. einen Molverhältnis $SiO_2/Me_2O$ von 2,09 bis 3,44, vorzugsweise 2,48 bis 3,17, aufweisen.

Zur Herstellung hochwertiger Organomineralprodukte ist bei der Umsetzung von Polyisocvanat und Wasserglaslösung die gleichmäßige Verteilung des Katalysators im Reaktionsgemisch wünschenswert. Der Katalysator wird üblicherweise der Wasserglaslösung zugesetzt, wobei jedoch in der bekannten Praxis keine beständige Dispersion erreicht werden konnte, da sich das Gemisch beim Stehen enthomogenisiert.

Es wurde nun festgestellt, daß die Tendenz zur Enthomogenisierung verringert oder verhindert werden kann, wenn dem katalysatorhaltigen Gemisch Antimontrioxid zugesetzt wird. Dadurch kann der Katalysator in dispergierter Form gehalten werden. Dieser Befund ist unabhängig von der Menge des zugesetzten Katalysators, d. h. die vorteilhafte Wirkung des Zusatzes von Antimontrioxid tritt nicht nur bei der Lehre der vorliegenden Erfindung auf, sondern allgemein bei Verfahren zur Herstellung von Organomineralprodukten aus Polyisocyanaten und Wasserglaslösungen bei Verwendung von Trimerisierungskatalysatoren. Das Antimontrioxid wird in einer Menge von etwa 5 bis 100, vorzugsweise 20 bis 50, insbesondere 30 bis 40 Gewichtsprozent, bezogen auf die Katalysatormenge eingesetzt.

Zur Herstellung der bevorzugten, nicht expandierten Organomineralprodukte der Erfindung ist der Zusatz eines Treibmittels zum Reaktionsgemisch grundsätzlich nicht erforderlich. Je nach der genauen Rezepturgestaltung und den übrigen Bedingungen der Reaktion kann jedoch dem Gemisch eine genau dosierte, geringe Menge an Treibmittel zugesetzt werden, die jedoch nicht ausreichend ist, um eine Expandierung des Produktes bei der Polymerisation zu bewirken.

Dazu eignen sich flüchtige Substanzen, die bei Raumtemperatur flüssig sind und während der Umsetzung des Wasserglases mit dem Polyisocyanat infolge der dabei freiwerdenden Wärme verdampfen. Beispiele für geeignete flüchtige Substanzen sind Monofluortrichlormethan, Dichlordifluormethan und Trichlortrifluoräthan.

Die zugesetzte Menge an flüchtiger Substanz beträgt vorzugsweise höchstens 3,5 Gewichtsprozent, bezogen auf die Gesamtmasse des Reaktionsgemisches. Besonders bevorzugt ist ein Gehalt des Reaktionsgemisches an flüchtiger Substanz von 1 bis 2,8 Gewichtsprozent. Ein derart geringer Zusatz bewirkt keine Expandierung (Aufschäumen) des Produktes während der Umsetzung. Vielmehr entweicht die flüchtige Substanz praktisch vollständig in der Anfangsphase der Umsetzung aus dem Reaktionsgemisch und hinterläßt dabei einzelne Hohlräume und Kanäle, die die im Reaktionsgemisch verbleibende Alkalicarbonatlösung aufnehmen können. Dieser Mechanismus trägt mit zu der außerordentlichen mechanischen Festigkeit der entstehenden Produkte bei.

Dem Reaktionsgemisch können ferner keimbildende und stabilisierende Stoffe zugesetzt werden. Geeignete keimbildende Stoffe sind beispielsweise feinzerteilte Feststoffe, wie Siliciumdioxid oder Aluminiumoxid, gegebenenfalls zusammen mit Zinkstearat, oder amorphe Kieselsäuren oder Metallsilikate. Davon wird als Keimbildner das aus der kolloidalen Wasserglaslösung ausfallende Siliciumdioxid bevorzugt.

Geeignete Stabilisatoren sind Silikonöle auf der Basis von Polysiloxanen. Sie können in einer Menge von etwa 0,5 bis 2, insbesondere 0,8 bis 1,4 Gewichtsprozent, bezogen auf die Gesamtmasse des

Reaktionsgemisches, zugesetzt werden.

Je nach den gewünschten Eigenschaften der Organomineralprodukte können dem Reaktionsgemisch noch weitere Zusätze einverleibt werden. Hierzu gehören beispielsweise organische Verbindungen, die gegenüber Isocyanatgruppen reaktionsfähige Reste aufweisen. Beispiele dafür sind Polyole, wie Polyester- und Polyätherpolyole sowie Phosphonatester z. B. Tri-β-chloräthyl- oder -isopropyl-phosphonat, die in der Polyurethan-Chemie bekannt sind. Die Polyole sollen in ihrer Menge derart begrenzt sein, daß ihr Zusatz den Aufbau eines dreidimensionalen organischen und eines damit verwobenen anorganischen Gerüstes nicht stört. Zweckmäßigerweise wird der Zusatz an Polyol oder Phosphonatester deshalb auf höchstens 2 bis 45, vorzugsweise 10 - 20 Gewichtsprozent, bezogen auf die Isocyanatkomponente, begrenzt.

Zur Verminderung der Entflammbarkeit der Organomineralprodukte der Erfindung können dem Reaktionsgemisch flammhemmende Stoffe zugesetzt werden. Hierfür eignen sich die in der Kunststoffchemie bekannten flammhemmenden oder flammverzögernden Stoffe, wie Phosphate und Borate. Die Menge an flammhemmenden Stoffen kann im Bereich von 2 bis 30 Gewichtsprozent, bezogen auf die Isocyanatkomponente, liegen.

Dem Reaktionsgemisch können ferner Zuschlags- und Füllstoffe zugesetzt werden, die eine weitere Verstärkung des Produktes bewirken. Beispiele für geeignete Füllstoffe sind Diatomeenerde, Aluminiumoxidhydrat, Magnesiumsilikat, Asbestpulver, Kreide, Asbestfasern und Glasfasern. Die Menge der zugesetzten Füllstoffe richtet sich in erster Linie nach der Viskosität des Gemisches. Sie liegt vorzugsweise im Bereich von 0,1 bis 30 Gewichtsprozent, bezogen auf das Gewicht der eingesetzten Wasserglaslösung.

Nach Wunsch können dem Reaktionsgemisch auch Pigmente oder Farbstoffe einverleibt werden.

Zur Herstellung der Organomineralprodukte der Erfindung werden vorzugsweise zunächst zwei Komponenten A und B hergestellt. Die Komponente (A) besteht aus der Wasserglaslösung und enthält den Katalysator sowie die Verbindung, die den Katalysator dispergiert hält, das Polyol, die flammhindernden Zusätze, Füllstoffe und Farbstoffe. Die Komponente (B) besteht aus dem Polyisocvanat und enthält gegebenenfalls den Cokatalysator, sowie gegebenenfalls die flüchtige Substanz und den Stabilisator. Auch diese Komponente kann mit den genannten Bestandteilen verträgliche Zuschlags- und Füllstoffe sowie andere der genannten Zusätze enthalten.

Nachdem auch das als Dispergiermittel für den Katalysator geeignete Antimontrioxid als Cokatalysator brauchbar ist, kann dieser auch in der Komponente (A) enthalten sein.

Zur Herstellung der Organomineralprodukte werden die Komponenten A und B sorgfältig vermischt. Die Startzeit der erhaltenen Gemische liegt im allgemeinen zwischen 5 und mehr als 100 Sekunden und ist nach Wunsch steuerbar. Gegebenenfalls können die Komponenten oder das Gemisch erwärmt oder gekühlt werden, um die Startzeit den Erfordernissen anzupassen.

Die Umsetzung des Gemisches beginnt mit der Reaktion von NCO-Gruppen mit dem Wasser der Wasserglaslösung. Dabei entsteht Polyharnstoff und gasförmiges $CO_2$. Diese Umsetzung verläuft exotherm und die freiwerdende Wärme führt einerseits zur Verflüchtigung der flüchtigen Substanz und andererseits zum Beginn der Trimerisierung der verbliebenen NCO-Gruppen unter der Einwirkung des Katalysators. Das freigesetzte $CO_2$ seinerseits setzt sich mit dem $Me_2O$ des Wasserglases zu Alkalimetallcarbonat um. Dabei wird dem Wasserglas die $Me_2O$-Komponente entzogen und die verbleibende Kieselsäure-Komponente bildet im Verlauf der Umsetzung ein dreidimensionales anorganisches Gerüst, das sich mit dem gleichzeitig entstehenden organischen Polymerisat zu einem "interpermeated network" großer Festigkeit verbindet. Die in den von der entweichenden flüchtigen Substanz hinterlassenen "Kanälen" zurückbleibende Alkalicarbonatlösung trägt zur Erhöhung der Festigkeit bei.

Die Organomineralprodukte der Erfindung eignen sich aufgrund ihrer hervorragenden mechanischen und physikalischen Eigenschaften, insbesondere der hohen Festigkeit und der Wasserunempfindlichkeit des Herstellungsverfahrens für einen breiten Bereich von Anwendungsgebieten, z. B. als Bau-, Beschichtungs-, Abdichtungs- und Isoliermaterial sowie auch als Kitt oder Klebstoff. Das Material kann durch Tauchen, Injizieren, Spritzen, Aufrollen oder Aufstreichen und dergl. eingesetzt werden.

Die Beispiele erläutern die Erfindung.

**Beispiel 1**

Es wird eine Reaktionskomponente A hergestellt, die folgende Stoffe in den angegebenen Mengen enthält:

| Bestandteil: | Gew.-% |
|---|---|
| Natronwasserglas 48/50 | 94,48 |
| $Sb_2O_3$ | 0,58 |
| 2,4,6-Tris-(dimethylamino-methyl)-phenol | 1,50 |
| Wasser | 3,44 |

Getrennt davon wird eine Reaktionskomponente B aus folgenden Bestandteilen hergestellt:

| Bestandteil: | Gew.-%: |
|---|---|

| | |
|---|---|
| Polyphenylpolymethylen-polyisocyanat mit einem NCO-Anteil von etwa 31 Gew.-% | 93,00 |
| Trichlorfluormethan | 5,00 |
| Stabilisator | 2,00 |

Beim Vermischen der beiden Reaktionskomponenten in einem Gewichtsverhältnis A : B = 4 : 3 (11,36 mMol Katalysator pro Mol NCO-Gruppen) setzt nach etwa 1 Minute Gelierung ein. Nach 2 Minuten wird starker Temperaturanstieg beobachtet, und das Gemisch härtet zu einem Organomineralprodukt aus.

Zur Bestimmung der Biegezugfestigkeit des Produktes werden zwei Steine im Abstand von 5 mm an den Kopfseiten mit Tesaleinenband fixiert und das Gemisch der Reaktionskomponenten nach intensivem Rühren mit einem Holzstab kurz vor dem Gelieren blasenfrei in den Spalt zwischen den Steinen eingegossen.

Die Biegezugfestigkeit des derart geklebten Aufbaus wird

a) nach 2 Std. bei 20°C
b) nach 2 Std. bei 50°C (Aufbau im Trockenschrank)
c) nach 8 Tagen bei 20°C

gemessen (Biegezuggerät: Chemische Laboratorien für Tonindustrie, Prof. Dr. H. Seger und E. Cramer, Berlin). Die erhaltenen Werte sind in Tabelle I aufgeführt.

**Beispiele 2 bis 5 und Vergleichsbeispiele 1 und 2**

Die Reaktionskomponenten A und B werden in den in Tabelle I angegebenen Verhältnissen vermischt. In dieser Tabelle sind ferner angegeben die mMol Katalysator pro Mol NCO sowie das Molverhältnis $NCO/SiO_2$, die sich bei den jeweiligen Mischungsverhältnissen einstellen. Die Biegezugfestigkeiten werden in der in Beispiel 1 angegebenen Weise geprüft. Die Ergebnisse sind in Tabelle I zusammengefaßt und in Fig. 1 als Funktion des Verhältnisses mMol Katalysator/Mol NCO sowie in Fig. 2 die Funktion des Verhältnisses Mol NCO/Mol $SiO_2$ graphisch dargestellt.

**Tabelle I**

| Beispiel Nr. | Verhältnis A : B | mMol Katalysator pro Mol NCO | Mol NCO / Mol $SiO_2$ | Biegezugfestigkeit [N/mm$^2$] 2 h 50°C | 2 h 20°C | 8 Tage 20°C |
|---|---|---|---|---|---|---|
| 1 | 1,3 | 11,36 | 1,00 | 3,3 | 0,89 | 8,10 |
| 2 | 1,2 | 10,38 | 1,10 | 1,59 | 0,83 | 7,05 |
| 3 | 1,0 | 8,65 | 1,32 | 1,23 | 0,78 | |
| 4 | 1,5 | 12,97 | 0,88 | 2,07 | 0,82 | |
| 5 | 1,6 | 14,4 | 0,82 | 0,81 | 0,80 | |
| Vergl. 1 | 0,6 | 5,77 | 2,20 | 0,76 | 0,88 | 3,8 |
| Vergl. 2 | 2,0 | 17,3 | 0,66 | 0,56 | 0,76 | |

**Patentansprüche**

1. Hochfeste Organomineralprodukte, erhältlich durch Umsetzung von Polyisocyanaten und wäßrigen Alkalisilikatlösungen in Gegenwart eines die Trimerisierung des Polyisocyanates aktivierenden Katalysators, dadurch gekennzeichnet, daß der Katalysator bei der Herstellung in einer Menge von 6,0 bis 14,5 mMol pro Mol NCO-Gruppen im Reaktionsgemisch eingesetzt wird, so daß bei der Umsetzung ineinander verwobene Netzwerke aus anorganischem und organischem Polymerisat entstehen.

2. Organomineralprodukte nach Anspruch 1, dadurch gekennzeichnet, daß der Katalysator in einer Menge von 8,5 bis 13,8, insbesondere von 10,2 bis 13,3 mMol pro Mol NCO-Gruppen eingesetzt wird.

3. Organomineralprodukte nach Anspruch 1 und 2, dadurch gekennzeichnet, daß das eingesetzte Polyisocyanat einen Gehalt an NCO-Gruppen von 10 bis 55 Gewichtsprozent, bezogen auf die Masse des Polyisocyanats, aufweist.

4. Organomineralprodukte nach Anspruch 3, dadurch gekennzeichnet, daß zu ihrer Herstellung 4,4'-Diphenylmethandiisocyanat, ein Phosgenierungsprodukt von Anilin-Formaldehydkondensaten (rohes MDI) oder ein Präpolymerisat davon als Polyisocyanat eingesetzt wird.

5. Organomineralprodukte nach Anspruch 4, dadurch gekennzeichnet, daß das Präpolymerisat ein Umsetzungsprodukt von rohem MDI mit glykolgestartetem Polysiloxan mit einer OH-Zahl von 40 bis 200 darstellt.

6. Organomineralprodukte nach Anspruch 1, dadurch gekennzeichnet, daß zu ihrer Herstellung eine wäßrige Natriumsilikatlösung mit einem Feststoffgehalt von 40 bis 60 Gewichtsprozent eingesetzt wird.

7. Organomineralprodukte nach Anspruch 1 oder 6, dadurch gekennzeichnet, daß zu ihrer Herstellung eine wäßrige Alkalisilikatlösung mit einem Molverhältnis $SiO_2$ zu $MeO_2$ von 2,09 bis 3,44, vorzugsweise von 2,48 bis 3,17 eingesetzt wird.

8. Organomineralprodukte nach Anspruch 1 bis 3, 6 und 7, dadurch gekennzeichnet, daß zu ihrer Herstellung das Polyisocyanat und die Alkalisilikatlösung in einem Molverhältnis $NCO/SiO_2$ von 0,8 bis 1,4, vorzugsweise von 0,85 bis 1,15, eingesetzt werden.

9. Organomineralprodukte nach Anspruch 1 bis 8, dadurch gekennzeichnet, daß zu ihrer Herstellung eine flüchtige Substanz in einer Menge von höchstens 3,5 Gewichtsprozent, bezogen auf die Gesamtmasse des Reaktionsgemisches, eingesezt wird.

10. Organomineralprodukt nach Anspruch 1 bis 9, dadurch gekennzeichnet, daß es nicht expandiert ist.

11. Hochfeste Organomineralprodukte, erhältlich durch Umsetzung von Polyisocyanaten und wäßrigen Alkalisilikatlösungen in Gegenwart eines die Trimerisierung des Polyisocyanates aktivierenden Katalysators, dadurch gekennzeichnet, daß bei der Herstellung (a) der Katalysator in einer Menge von 6,0 bis 14,5 mMol pro Mol NCO-Gruppen im Reaktionsgemisch und (b) die Alkalisilikatlösung im Hinblick auf ihren $SiO_2$-Anteil in einem Molverhältnis $NCO/SiO_2$ von 0,8 bis 1,4 eingesetzt werden, so daß bei der Umsetzung ineinander verwobene Netzwerke aus anorganischem und organischem Polymerisat entstehen.

12. Verfahren zur Herstellung der Organomineralprodukte nach Anspruch 1, dadurch gekennzeichnet, daß man ein Polyisocyanat mit einer wäßrigen Alkalisilikatlösung in Anwesenheit eines die Trimerisierungsreaktion des Polyisocyanates aktivierenden Katalysators in einer Menge von 6,0 bis 14,5 mMol Katalysator pro Mol NCO-Gruppen im Reaktionsgemisch umsetzt.

13. Verfahren nach Anspruch 12, dadurch gekennzeichnet, daß man das Polyisocyanat und die Alkalisilikatlösung in einem Molverhältnis $NCO/SiO_2$ von 0,8 bis 1,4, vorzugsweise von 0,85 bis 1,15, einsetzt.

14. Verfahren nach Anspruch 12, dadurch gekennzeichnet, daß man dem den Katalysator enthaltenden Gemisch Antimontrioxid zusetzt.

15. Verfahren nach Anspruch 12 bis 14, dadurch gekennzeichnet, daß man zusätzlich mindestens einen die Trimerisierungsreaktion fördernden Cokatalysator einsetzt.

16. Verfahren nach Anspruch 15, dadurch gekennzeichnet, daß man als Cokatalysator Trialkylphosphane, Alkalimetallsalze von Carbonsäuren oder Übergangsmetallverbindungen wie $Sb_2O_3$, $ZrOCl_2$, $SbCl_5$, CuCl und $FeCl_3$ einsetzt.

17. Verwendung der Organomineralprodukte gemäß Ansprüche 1 bis 11 als Bau-, Beschichtungs-, Abdichtungs- oder Isoliermaterial oder als Kitt oder Klebstoff.

**Revendications**

1. Produits organominéraux hautement resistants, qui peuvent être obtenus par réaction de polyisocyanates et de solutions aqueuses de silicate de metal alcalin en présence d'un catalyseur activant la trimérisation du polyisocyanate, caractérisés en ce que le catalyseur est, au cours de la préparation, mis en oeuvre en une quantité de 6,0 à 14,5 mmoles par mole de groupes NCO dans le mélange réactionnel de façon à obtenir, lors de la réaction, des réseaux mutuellement entrelacés de polymère inorganique et de polymère organique.

2. Produits organominéraux suivant la revendication 1, caractérisés en ce que le catalyseur est mis en oeuvre en une quantité de 8,5 a 13,8, en particulier de 10,2 à 13,3, mmoles par mole de groupes NCO.

3. Produits organominéraux suivant l'une des revendications 1 et 2, caractérisés en ce que le polyisocyanate mis en oeuvre présente une teneur en groupes NCO de 10 à 55 % en poids, par rapport à la masse du polyisocyanate.

4. Produits organominéraux suivant la revendication 3, caractérisés en ce que, pour leur préparation, on met en oeuvre comme polyisocyanate du diisocyanate de 4,4'-diphénylméthane, un produit de phosgénation de produits de condensation d'aniline-formaldéhyde (MDI brut) ou un prépolymère de ceux-ci.

5. Produits organominéraux suivant la revendication 4, caractérisés en ce que le prépolymère représente un produit de la réaction de MDI brut avec du polysiloxane amorcé au glycol et présentant un indice de OH de 40 à 200.

6. Produits organominéraux suivant la revendication 1, caractérisés en ce que, pour leur préparation, on met en oeuvre une solution aqueuse de silicate de sodium présentant une teneur en matière solide de 40 à 60 % en poids.

7. Produits organominéraux suivant l'une des revendications 1 et 6, caractérisés en ce que, pour leur préparation, on met en oeuvre une solution aqueuse de silicate de métal alcalin ayant un rapport molaire entre $SiO_2$ et $Me_2O$ de 2,09 à 3,44, de préférence de 2,48 à 3,17.

8. Produits organominéraux suivant l'une des revendications 1 à 3, 6 et 7, caractérisés en ce que, pour leur préparation, on met en oeuvre le polyisocyanate et la solution de silicate de métal alcalin dans un rapport molaire $NCO/SiO_2$ de 0,8 à 1,4, de préférence de 0,85 à 1,15.

9. Produits organominéraux suivant l'une des revendications 1 à 8, caractérisés en ce que, pour leur préparation, on met en oeuvre une substance volatile en une quantité d'au maximum 3,5 % en poids, par rapport à la masse totale du mélange réactionnel.

10. Produit organominéral suivant l'une des revendications 1 à 9, caractérisé en ce qu'il n'est pas expansé.

11. Produits organominéraux hautement résistants, que l'on peut obtenir par réaction de polyisocyanates et de solutions aqueuses de silicate de métal alcalin, en présence d'un catalyseur activant la trimérisation du polyisocyanate, caractérisés en ce que, au cours de la préparation, (a) le catalyseur est mis en oeuvre en une quantité de 6,0 à 14,5 mmoles par mole de groupes NCO dans le mélange réactionnel et (b) la solution de silicate de métal alcalin est, en ce qui concerne sa fraction de $SiO_2$, mise en oeuvre dans un rapport molaire $NCO/SiO_2$ de 0,8 à 1,4, de façon à obtenir, au cours de la réaction, des réseaux mutuellement entrelacés de polymère inorganique et de polymère organique.

12. Procédé de préparation de produits organominéraux suivant la revendication 1, caractérisé en ce qu'on fait réagir un polyisocyanate avec une solution aqueuse de silicate de métal alcalin en présence d'un catalyseur activant la réaction de trimérisation du polyisocyanate, en une quantite de 6,0 a 14,5 mmoles de catalyseur par mole de groupes NCO dans le mélange réactionnel.

13. Procédé suivant la revendication 12, caractérisé en ce qu'on met en oeuvre le polyisocyanate et la solution de silicate de métal alcalin dans un rapport molaire $NCO/SiO_2$ de 0,8 a 1,4, de préférence de 0,85 à 1,15.

14. Procédé suivant la revendication 12, caractérisé en ce qu'on ajoute du trioxyde d'antimoine au mélange contenant le catalyseur.

15. Procédé suivant l'une des revendications 12 à 14, caractérisé en ce qu'on met en supplément en oeuvre au moins un cocatalyseur favorisant la réaction de trimérisation.

16. Procédé suivant la revendication 15, caractérisé en ce que, comme cocatalyseur, on met en oeuvre des trialkylphosphanes, des sels de métal alcalin d'acides carboxyliques ou des composés de métal de transition, comme $Sb_2O_3$, $ZrOCl_2$, $SbCl_5$, CuCl et $FeCl_3$.

17. Utilisation des produits organominéraux suivant l'une des revendications 1 à 11 comme matière de construction, de recouvrement, d'étanchéification ou d'isolation ou comme mastic ou adhésif.

## Claims

1. High-strength organomineral products obtainable by reacting polyisocyanates and aqueous alkali silicate solutions in the presence of a catalyst prompting the trimerization of the polyisocyanate, characterized in that during preparation, the catalyst is used in the reaction mixture in an amount of 6.0 to 14.5 mmole per mole of NCO groups, so that interwoven networks of inorganic and organic polymers are formed during the reaction.

2. Organomineral products according to Claim 1, characterized in that the catalyst is used in an amount of 8.5 to 13.8, in particular 10.2 to 13.3 mmole per mole of NCO groups.

3. Organomineral products according to Claim 1 or 2, characterized in that the polyisocyanate used contains 10 to 55 weight percent of NCO groups, based on the mass of polyisocyanate.

4. Organomineral products according to Claim 3, characterized in that they have been prepared using 4,4'-diphenylmethane diisocyanate, a phosgenation product of aniline formaldehyde condensates (crude MDI), or a prepolymer thereof as polyisocyanate.

5. Organomineral products according to Claim 4, characterized in that the prepolymer is a reaction product of crude MDI and glycol-initiated polysiloxane having an OH number of 40 to 200.

6. Organomineral products according to Claim 1, characterized in that they have been prepared using an aqueous sodium silicate solution having a solids content of 40 to 60 weight percent.

7. Organomineral products according to Claim 1 or 6, characterized in that they have been prepared using an aqueous alkali silicate solution wherein the molar ratio of $SiO_2$ to $MeO_2$ is 2.09 to 3.44, preferably 2.48 to 3.17.

8. Organomineral products according to Claims 1 to 3, 6 and 7, characterized in that they have been prepared using the polyisocyanate and the alkali silicate solution in an $NCO/SiO_2$ molar ratio of 0.8 to 1.4, preferably 0.85 to 1.15.

9. Organomineral products according to Claims 1 to 8, characterized in that they have been prepared using a volatile substance in an amount of at most 3.5 weight percent, based on the total mass of the reaction mixture.

10. An organomineral product according to Claims 1 to 9, characterized in that it is not expanded.

11. High-strength organomineral products obtainable by reacting polyisocyanates and aqueous alkali silicate solutions in the presence of a catalyst prompting the trimerization of the polyisocyanate, characterized in that they have been prepared using (a) the catalyst in the reaction mixture in an amount of 6.0 to 14.5 mmole per mole of NCO groups and (b), considering its $SiO_2$ content, the alkali silicate solution in an $NCO/SiO_2$ molar ratio of 0.8 to 1.4, so that interwoven networks of inorganic and organic polymers are formed during the reaction.

12. A process for preparing the organomineral products according to Claim 1, characterized in that a polyisocyanate is reacted with an aqueous alkali silicate solution in the presence of a catalyst prompting the trimerization reaction of the polyisocyanate, using an amount of 6.0 to 14.5 mmole of catalyst per mole of NCO groups in the reaction mixture.

13. The process according to Claim 12, characterized in that the polyisocyanate and the alkali silicate solution is used in an $NCO/SiO_2$ molar ratio of 0.8 to 1.4, preferably 0.85 to 1.15.

14. The process according to Claim 12, characterized in that antimony trioxide is added to the mixture containing the catalyst.

15. The process according to Claims 12 to 14, characterized in that at least one co-catalyst promoting the trimerization reaction is used in addition.

16. The process according to Claim 15, characterized in that the co-catalysts used are trialkylphosphanes, alkali metal salts of carboxylic acids or transition metal compounds such as $Sb_2O_3$, $ZrOCl_2$, $SbCl_5$, CuCl and $FeCl_3$.

17. The use of the organomineral products according to Claims 1 to 11 as construction, coating, sealing or insulating material or as putty or adhesive.

FIG. 1

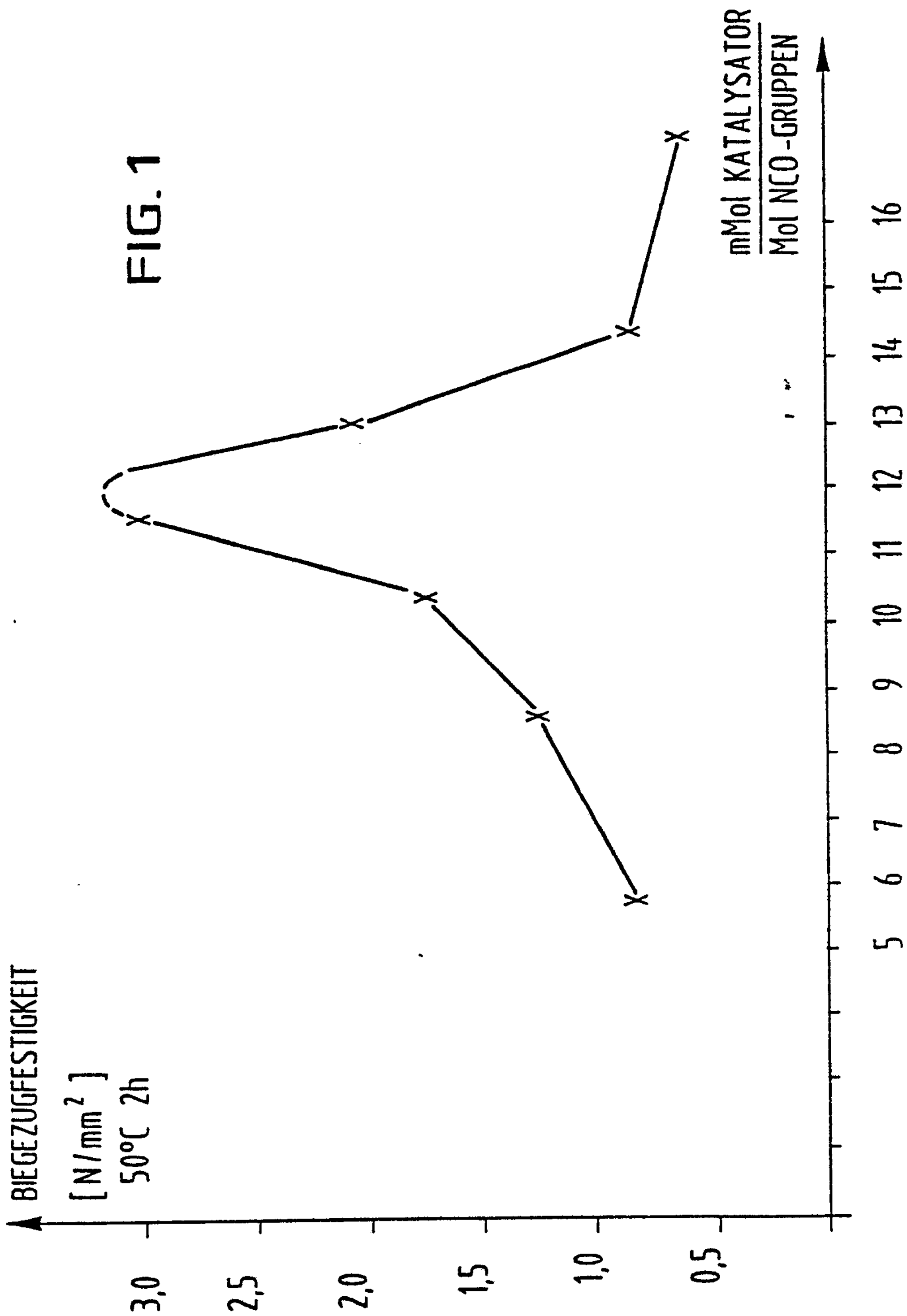
BIEGEZUGFESTIGKEIT
[N/mm²]
50°C 2h
3,0
2,5
2,0
1,5
1,0
0,5
5
6
7
8
9
10
11
12
13
14
15
16
mMol KATALYSATOR
Mol NCO-GRUPPEN

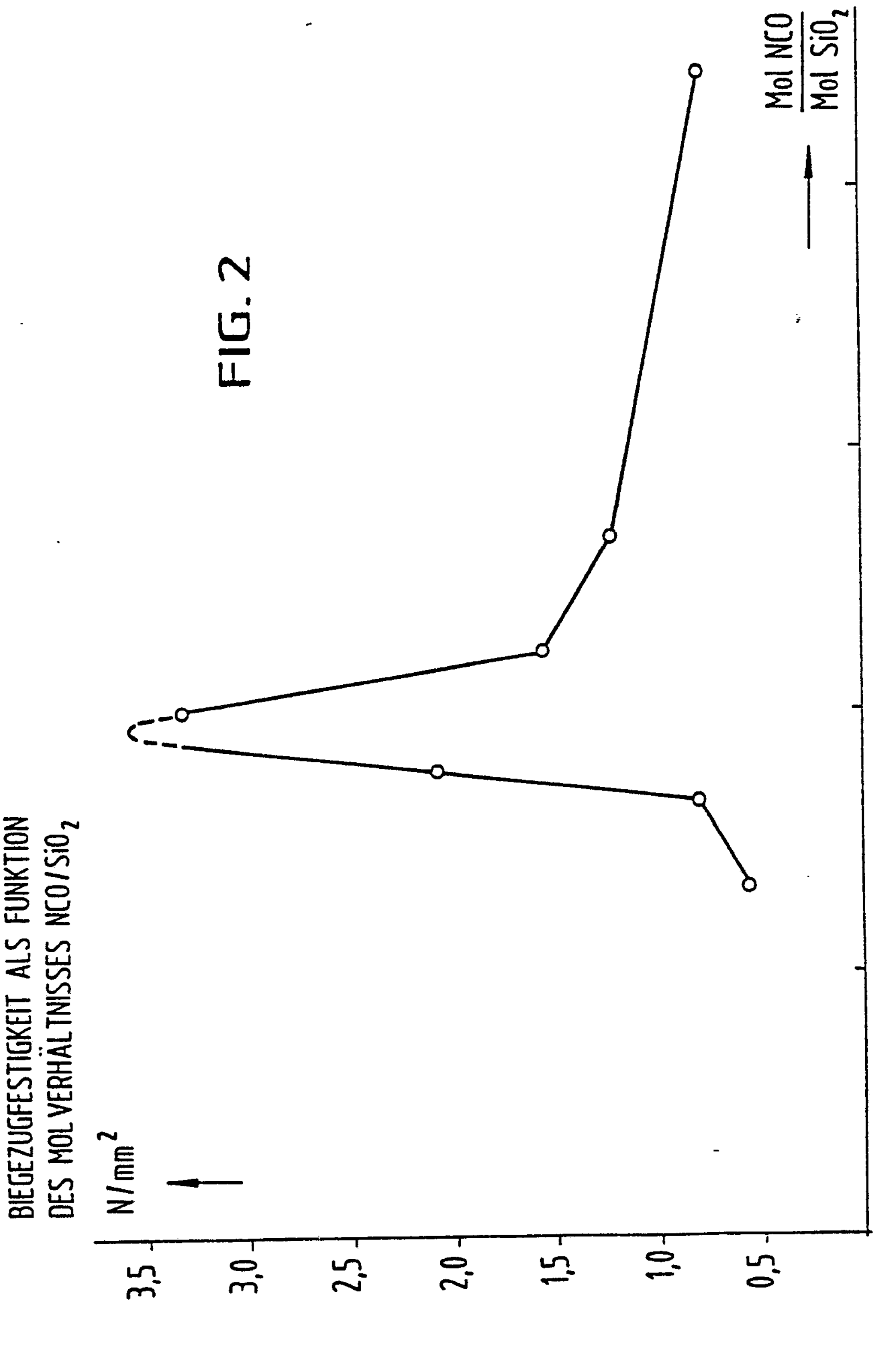
BIEGEZUGFESTIGKEIT ALS FUNKTION
DES MOL VERHÄLTNISSES NCO/SiO2
N/mm2
3,5
3,0
2,5
2,0
1,5
1,0
0,5
0,5
1,0
1,5
2,0
Mol NCO
Mol SiO2

FIG. 2